(19) **Europäisches Patentamt / European Patent Office / Office européen des brevets**

(11) **EP 4 737 059 A1**

(12) **EUROPEAN PATENT APPLICATION**
published in accordance with Art. 153(4) EPC

(43) Date of publication:
**06.05.2026 Bulletin 2026/19**

(21) Application number: **24851705.4**

(22) Date of filing: **31.07.2024**

(51) International Patent Classification (IPC):
**B23Q 17/20** (2006.01)    **G01N 3/42** (2006.01)

(52) Cooperative Patent Classification (CPC):
**B23Q 17/20; G01N 3/42**

(86) International application number:
**PCT/JP2024/027329**

(87) International publication number:
**WO 2025/033280 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023131351**

(71) Applicant: **Makino Milling Machine Co., Ltd.**
**Tokyo 152-8578 (JP)**

(72) Inventors:
• **TEZUKA, Ryo**
  **Fujiyoshida-shi, Yamanashi 403-0006 (JP)**
• **YOSHIMURA, Taishi**
  **Fujiyoshida-shi, Yamanashi 403-0006 (JP)**

(74) Representative: **Withers & Rogers**
**Withers & Rogers LLP**
**2 London Bridge**
**London SE1 9RA (GB)**

(54) **METHOD FOR MEASURING WORK-AFFECTED LAYER OF WORKPIECE, METHOD FOR PROCESSING WORKPIECE, DEVICE FOR MEASURING WORK-AFFECTED LAYER, AND MACHINE TOOL**

(57)    A method includes installing an indenter (42) for pressing into a workpiece (W) on a spindle (20), pressing the indenter (42) into the workpiece (W) using a feed device (22, 26, 34) of a machine tool (10), continuously measuring an indentation load (L) and an indentation depth (h), continuously calculating an indentation load coefficient (C), which is a coefficient when the indentation load (L) is functionally approximated by the indentation depth (h), suspending pressing of the indenter (42) into the workpiece (W) when a rate of change of the indentation load coefficient (C) with respect to the indentation depth (h) becomes a value sufficiently close to zero from negative, and calculating a work-affected layer depth (Z) by multiplying the indentation depth (h) when pressing is suspended by a depth conversion constant.

Fig. 1

EP 4 737 059 A1

## Description

FIELD

The present invention relates to a method for measuring a work-affected layer of a workpiece, a method for processing workpiece, a device for measuring work-affected layer, and a machine tool.

BACKGROUND

Workpiece materials are created through several steps including rolling, drawing, extrusion, forging, and surface treatment, resulting in a work-affected layer on the surface thereof. The workpiece material is then machined to achieve the desired shape and dimensions. Rough machining is performed during this initial stage, resulting in a work-affected layer on the workpiece surface. Residual strain in this work-affected layer can easily lead to residual stress, which can cause stress corrosion cracking, fatigue failure, and creep failure. Thus, finishing is used to remove the work-affected layer during the final product stage. In recent years, for example, difficult-to-machine materials such as nickel-based superalloys have become increasingly popular for lightweight and rigid aircraft components and for achieving both high performance and fuel efficiency in jet engines, and managing the work-affected layer of such materials has become increasingly important.

Conventionally known methods for evaluating work-affected layers include, for example, observation using an optical microscope or electron microscope, X-ray diffraction (XRD), electron backscatter diffraction (EBSD), micro-Vickers testing, etc. However, these evaluation methods require cutting the workpiece and observing the cross section, as well as dedicated measurement devices, management qualifications for handling them, and measurement know-how, making them difficult to implement on a regular basis at machining sites.

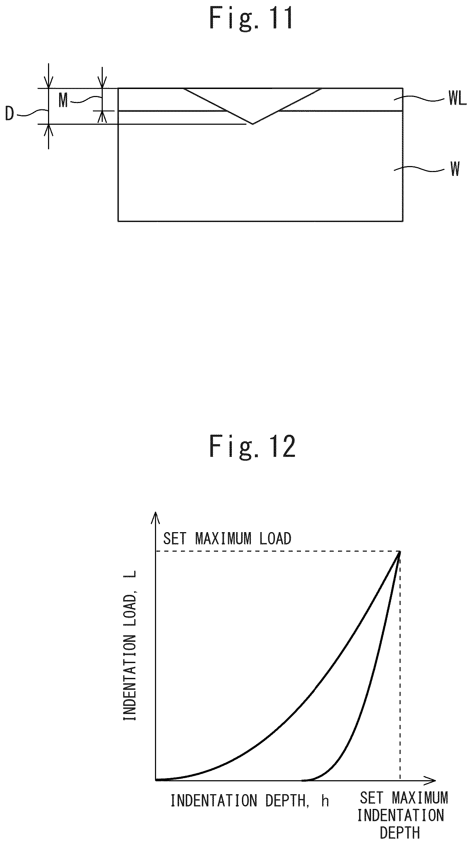

For example, Patent Literature 1 discloses a three-dimensional hardness distribution measurement method and system utilizing indentation testing. Indentation testing is a quasi-nondestructive testing method for evaluating the residual stress distribution in the sample depth direction from the load-displacement curve when a pyramid indenter or ball indenter indents the sample surface. FIG. 11 shows a schematic longitudinal cross-section of a sample surface indented with a pyramid indenter. FIG. 12 shows the relationship between indentation load L (vertical axis) and indentation depth h (horizontal axis) from the start of loading to unloading in an indentation test. It can be understood that the indentation load L can be approximated by a quadratic function of the indentation depth h. For example, as described in Non-Patent Literature 1, the indentation load coefficient (i.e., $L/h^2$), which is a coefficient when approximating the indentation load L as the quadratic function, decreases as the indentation depth h increases because it is affected by the hardened or softened work-affected layer in shallow indentation depth regions. Furthermore, it is known that when the pyramid indenter is pressed deeply, the influence of the work-affected layer decreases beyond a certain depth, and the indentation load coefficient becomes roughly constant. Thus, the depth of the work-affected layer can be determined from the change in the indentation load coefficient.

However, in common indentation testing methods, such as the Instrumented Indentation Technique (IIT) disclosed in Non-Patent Literature 1 and Non-Patent Literature 2, a load is applied to the workpiece until a preset indentation depth or indentation load is reached, which can leave an indentation that is deeper than necessary on the workpiece surface. For example, as shown in FIG. 11, this can occur when a pyramid indenter is indented to an indentation depth D exceeding the thickness M of the work-affected layer WL. Thus, though an indentation testing method is performed after the rough machining step to evaluate the depth of the work-affected layer and determine whether finishing is necessary in accordance with the depth, if an indentation is deeper than the amount to be removed in the finish machining step, finishing is no longer possible, and the workpiece may be deemed defective. Furthermore, in general indentation testing methods (or IIT), it is difficult to adjust the position and phase of the indenter used for indentation, making it difficult to perform an indentation test during the machining step of a machined part.

[CITATION LIST]

[PATENT LITERATURE]

[PTL 1] Japanese Patent Application Publication No. 2021-85804

[NON-PATENT LITERATURE]

[NPL 1] HIKAWA Shuhei, OKANO Shigetaka, MOCHIZUKI Masahito, HASHIMOTO Tadafumi, TEZUKA Ryo, "Depth evaluation of affected layer by instrumented indentation technique and examination of its applicability to curved surface shape", Abstract of the Japan Welding Society National Convention, Vol. 112, Japan Welding Society, April 2023, pp. 166-167 [NPL 2] OKANO Shigetaka and MOCHIZUKI Masahito, "Proposing a new semi-nondestructive measurement of non-equiaxial residual stress field using indentation technique without reference value of hardness under non-stress state", Bulletin of the Japan Society of Mechanical Engineers, Vol. 80, No. 820, Japan Society of Mechanical Engineers, 2014, pp. 1-11

SUMMARY

[TECHNICAL PROBLEM]

In view of the above circumstances, an object of the present invention is to provide a measurement method for a work-affected layer of a workpiece, a machining method for the workpiece, a device for measuring work-affected layer, and a machine tool which can easily evaluate the state of the work-affected layer of the machined surface of the workpiece on a machine tool.

[SOLUTION TO PROBLEM]

According to one aspect of the present invention, there is provided a method for measuring a work-affected layer of a surface of a workpiece, on a machine tool for machining the workpiece attached to a table with a tool installed on a spindle, the method comprising the steps of installing, in place of the tool, an indenter for indenting the workpiece on the spindle, pressing the indenter into the workpiece using a feed device of the machine tool, continuously measuring an indentation load for pressing the indenter and an indentation depth of the indenter into the workpiece, continuously calculating an indentation load coefficient, which is a coefficient when the indentation load is functionally approximated by the indentation depth, suspending pressing of the indenter into the workpiece when a rate of change of the indentation load coefficient with respect to the indentation depth becomes a value sufficiently close to zero from negative, and calculating a work-affected layer depth by multiplying the indentation depth of the indenter when pressing is suspended by a depth conversion constant.

Further, according to one aspect of the present invention, there is provided a method for machining a workpiece, for performing, after rough machining of a workpiece attached to a table of a machine tool with a tool installed on a spindle, measurement of a work-affected layer of a surface of the workpiece on the machine tool, and performing finishing after measurement of the work-affected layer, the method comprising the steps of installing, after the rough machining, an indenter for indenting the workpiece on the spindle in place of the tool, pressing the indenter into the workpiece using a feed device of the machine tool, continuously measuring an indentation load for pressing the indenter and an indentation depth of the indenter into the workpiece, continuously calculating an indentation load coefficient, which is a coefficient when the indentation load is functionally approximated by the indentation depth, suspending pressing of the indenter into the workpiece when a rate of change of the indentation load coefficient with respect to the indentation depth becomes a value sufficiently close to zero from negative, calculating a work-affected layer depth by multiplying the indentation depth of the indenter when pressing is suspended by a depth conversion coefficient, and performing finishing when the calculated work-affected layer depth is less than a finishing allowance of the workpiece.

Furthermore, according to one aspect of the present invention, there is provided a machine tool for performing measurement of a work-affected layer of a surface of a workpiece, on a machine tool for machining the workpiece attached to a table with a tool installed on a spindle, the machine tool comprising an indenter which can be installed on the spindle in place of the tool and which forms an indentation by pressing into the workpiece using a feed device of the machine tool, an indentation load detector for continuously measuring an indentation load of the indenter on the workpiece, an indentation depth detector for continuously measuring an indentation depth of the indenter on the workpiece, an indenter pressing suspension control means for continuously calculating an indentation load coefficient, which is a coefficient when the indentation load is functionally approximated by the indentation depth, and suspending pressing of the indenter into the workpiece when a rate of change of the indentation load coefficient with respect to the indentation depth becomes a value sufficiently close to zero from negative, and a work-affected layer depth calculation means for calculating a work-affected layer depth by multiplying the indentation depth of the indenter when pressing is suspended by a depth conversion constant.

Further, according to one aspect of the present invention, there is provided a device for measuring work-affected layer which is included in a machine tool for machining a workpiece attached to a table with a tool installed on a spindle, and which is for performing measurement of a work-affected layer of a surface of the workpiece, the device for measuring work-affected layer comprising an indenter which can be installed on the spindle in place of the tool and which forms an indentation by pressing into the workpiece using a feed device of the machine tool, an indenter holder to which the indenter is detachably attached and which has a sensor for detecting an indentation load of the indenter against the workpiece, and an arithmetic device which can be connected to a controller of the machine tool, for continuously calculating an indentation load coefficient, which is a coefficient when the indentation load is functionally approximated by the indentation depth, suspending pressing of the indenter into the workpiece when a rate of change of the indentation load coefficient with respect to the indentation depth becomes a value sufficiently close to zero from negative, and calculating a work-affected layer depth by multiplying the indentation depth of the indenter when pressing is suspended by a depth conversion constant.

[ADVANTAGEOUS EFFECTS OF INVENTION]

According to the method for measuring a work-affected layer of a workpiece according to one aspect of the present invention, an indenter installed on a spindle, in place of a tool, can indent the workpiece using a feed device of a machine tool, and the indentation load for pressing the indenter and the indentation depth of the indenter into the workpiece can continuously be measured. Thus, on the machine tool, the position and phase of the indenter relative to the workpiece can be adjusted, and measurement of the work-affected layer of the surface of the workpiece can be performed, whereby the state of the work-affected layer can be easily evaluated. Furthermore, when the rate of change of the indentation load coefficient, which is a coefficient when the indentation load is functionally approximated by the indentation depth, becomes a value sufficiently close to zero from negative, i.e., when the influence of the work-affected layer on the indentation load becomes small, pressing of the indenter into the workpiece can be suspended, and the indentation depth of the indenter when pressing is suspended can be multiplied by the depth conversion constant to calculate the work-affected layer depth. The work-affected layer of the workpiece can be easily and quickly measured and evaluated in this manner by utilizing the inherent mechanical configuration of the machine tool, without using a dedicated indentation measurement device or removing the workpiece from the machine tool.

According to the method for machining a workpiece according to one aspect of the present invention, after rough machining, an indenter installed on a spindle, in place of a tool, can indent the workpiece using a feed device of a machine tool, and the indentation load for pressing the indenter and the indentation depth of the indenter into the workpiece can be measured continuously. Thus, on the machine tool, the position and phase of the indenter relative to the workpiece can be adjusted, and measurement of the work-affected layer of the workpiece surface can be performed, whereby the state of the work-affected layer can easily be evaluated. Furthermore, when the rate of change of the indentation load coefficient, which is a coefficient when the indentation load is functionally approximated by the indentation depth, becomes a value sufficiently close to zero from negative, i.e., when the influence of the work-affected layer on the indentation load becomes small, pressing of the indenter into the workpiece can be suspended, and the indentation depth of the indenter when pressing is suspended can be multiplied by the depth conversion constant to calculate the work-affected layer depth. Thus, depth of the work-affected layer can be calculated without applying a load to the workpiece until a preset indentation depth or indentation load value is reached, whereby the calculated depth of the work-affected layer can be prevented or suppressed from becoming larger than the finishing allowance of the workpiece. As a result, the probability of the workpiece being rejected is reduced, and finishing is only performed when the calculated depth of the work-affected layer is less than the finishing allowance of the workpiece, eliminating unnecessary finishing.

According to the machine tool according to one aspect of the present invention, an indenter installed on a spindle, in place of a tool, can indent the workpiece using a feed device of a machine tool, and the indentation load for pressing the indenter and the indentation depth of the indenter into the workpiece can be continuously measured using an indentation load detector and an indentation depth detector. Thus, on the machine tool, the position and phase of the indenter relative to the workpiece can be adjusted, and measurement of the work-affected layer of the surface of the workpiece can be performed, whereby the state of the work-affected layer can be easily evaluated. Furthermore, when the rate of change of the indentation load coefficient, which is a coefficient when the indentation load is functionally approximated by the indentation depth, becomes a value sufficiently close to zero from negative, i.e., when the influence of the work-affected layer on the indentation load becomes small, pressing of the indenter into the workpiece can be suspended by the indenter pressing suspension control means. Further, the work-affected layer depth can be calculated by the work-affected layer depth calculation means by multiplying the indentation depth of the indenter when pressing is suspended by the depth conversion constant. Thus, the work-affected layer depth can be calculated without applying load to the workpiece until it reaches a preset indentation depth or indentation load value. As a result, the probability of the workpiece being rejected can be reduced.

According to the device for measuring work-affected layer according to one aspect of the present invention, there is comprised an indenter which can be installed on the spindle in place of the tool and which forms an indentation by pressing into the workpiece using a feed device of the machine tool, and a tool holder to which the indenter is detachably attached and which has a sensor for detecting an indentation load of the indenter against the workpiece. Thus, on the machine tool, the position and phase of the indenter relative to the workpiece can be adjusted, and measurement of the work-affected layer of the surface of the workpiece can be performed, whereby the state of the work-affected layer can be easily evaluated. Furthermore, since there is comprised an arithmetic device which can be connected to the machine tool controller, the indentation load coefficient, which is a coefficient when the indentation load is functionally approximated by the indentation depth, is continuously calculated, and when the rate of change of the indentation load coefficient relative to the indentation depth becomes a value sufficiently close to zero from negative, pressing of the indenter into the workpiece is suspended, and the indentation depth when the pressing of the indenter is suspended is multiplied by the depth conversion constant to calculate the work-affected layer depth. As a result, a function which enables easy measurement of the work-affected layer of the workpiece on the machine tool can be added to a normal machine tool other than the above-mentioned machine tool for carrying out the method for measurement of a work-affected layer of the workpiece of the present invention.

BRIEF DESCRIPTION OF DRAWINGS

FIG. 1 shows a side view of a machine tool according to an embodiment of the present invention.

FIG. 2 shows a side view of a machine tool for pressing an indenter into a workpiece.

FIG. 3 shows an enlarged view of the workpiece and indenter of FIG. 2.

FIG. 4 shows an enlarged view of an inclined indenter being pressed into a workpiece.

FIG. 5 shows a cross-sectional view of a work-affected layer of a workpiece surface into which an indenter has been pressed.

FIG. 6 shows a graph illustrating the relationship between indentation load, indentation load coefficient, and rate of change of the indentation load coefficient and the indentation depth.

FIG. 7 shows a time series representing an amount of change in indentation load over time.

FIG. 8 shows the surface of the workpiece after indenting with a Vickers pyramid indenter and a Knoop pyramid indenter.

FIG. 9 shows an explanatory diagram of machining steps of a workpiece including an indentation test.

FIG. 10 shows a flow chart of the machining steps of a workpiece including an indentation test.

FIG. 11 shows a cross-sectional view of a sample surface into which a pyramid indenter has been pressed in a conventional indentation test method.

FIG. 12 is a graph showing the relationship between indentation load and indentation depth from the start of loading to the end of unloading in an indentation test.

DESCRIPTION OF EMBODIMENTS

A machine tool according to an embodiment will be described below with reference to the attached drawings. Identical or corresponding elements have been assigned the same reference signs, and duplicate descriptions thereof have been omitted. To facilitate understanding, the scales of the drawings may be changed.

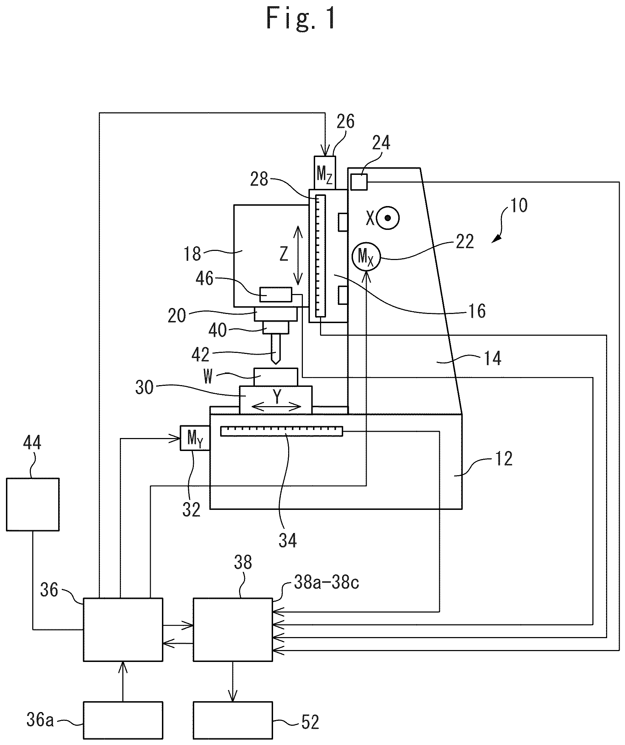

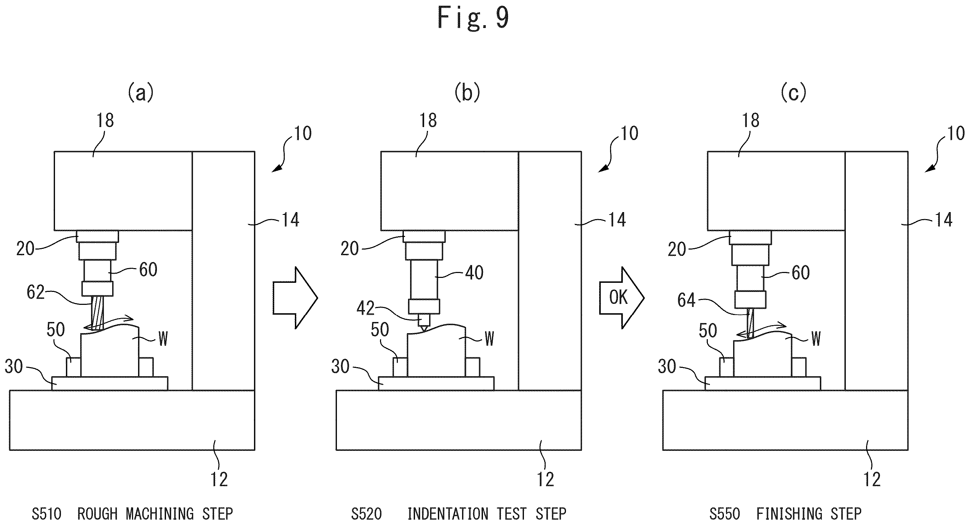

FIG. 1 shows a side view of a machine tool 10 according to the present embodiment. The machine tool 10 comprises a bed 12 serving as a base and a column 14 erected on an upper surface of the bed 12. A table 30 for affixation of a workpiece W, which is the machining target, using a fixture 50 is arranged on an upper surface of the bed 12 (refer to FIG. 9). The table 30 can move on the bed 12 via a guide surface. The machine tool 10 is preset with a machine coordinate system having a predetermined position as the origin, and includes an X-axis, a Y-axis, and a Z-axis as linear mutually orthogonal axes. The machine tool 10 according to the present embodiment is vertical, and the Z-axis extends vertically. The X-axis and Y-axis are set on a plane perpendicular to the Z-axis, here the horizontal plane. In the machine tool 10, the table 30 is configured so as to move along the Y-axis direction (left-right direction). A saddle 16 arranged on a front surface of the column 14 is configured so as to be movable along the X-axis direction (the direction perpendicular to the surface of the drawing).

A spindle head 18 is arranged on the front surface of the saddle 16 so as to be movable up and down along the Z-axis (machine vertical direction). A spindle 20 is attached to the tip end (here, the lower side) of the spindle head 18, and is configured so as to be rotatable about an axis parallel to the Z-axis relative to the spindle head 18. An indenter 42 or a tool 62, 64 (refer to FIG. 9) for machining the workpiece W while rotating together with the spindle 20 is detachably attached to the spindle 20 via an indenter holder 40 or a tool holder 60. As a result, the machine tool 10 is configured so that the spindle 20 for attaching the indenter 42 or the tool 62, 64 and the table 30 for arranging the workpiece W can move relatively along the X-axis, Y-axis, and Z-axis.

An X-axis feed device 22 as a feed device for displacing the saddle 16 along the X-axis direction and moving the indenter 42 or the tool 62, 64 relative to the workpiece W along the X-axis direction is arranged on the front side of the column 14. An X-axis position detection device 24 for detecting the position of the indenter 42 or the tool 62, 64 attached to the spindle 20 in the X-axis direction is also arranged on the column 14.

A Y-axis feed device 32 as a feed device for displacing the table 30 along the Y-axis direction to move the workpiece W relative to the indenter 42 or the tool 62, 64 along the Y-axis direction is arranged on the bed 12. A Y-axis position detection device 34 for detecting the position, in the Y-axis direction, of the table 30 on which the workpiece W is arranged is arranged on the bed 12.

A Z-axis feed device 26 as a feed device for displacing the spindle head 18 along the Z-axis direction and moving the indenter 42 or the tool 62, 64 relative to the workpiece W along the Z-axis direction is arranged on the saddle 16. A Z-axis position detection device 28 for detecting the position of the indenter 42 or the tool 62, 64 attached to the spindle 20 in the Z-axis direction is arranged on the saddle 16.

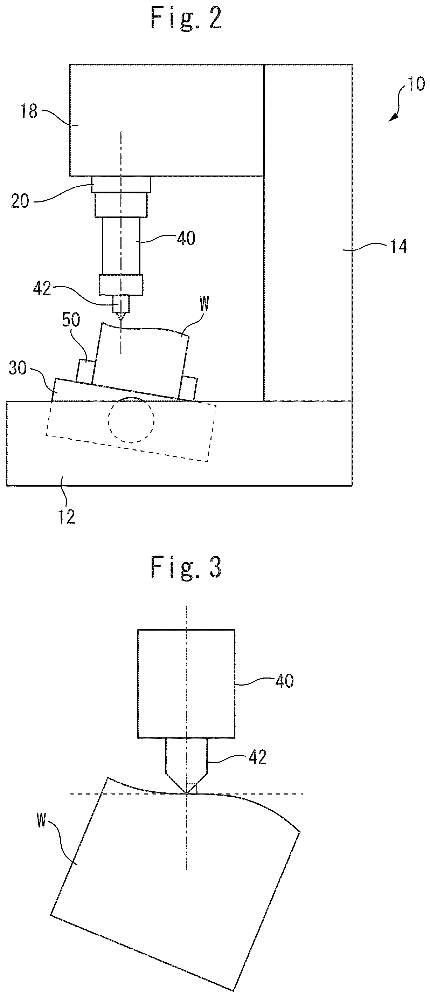

FIG. 2 is a schematic side view of the machine tool 10. FIG. 3 shows an enlarged view of the workpiece W and the indenter 42 for indentation thereof. The table 30 of the machine tool 10 of the present drawing is configured so as to be rotatable relative to the bed 12. Thus, the indenter 42 can be pressed perpendicularly into the workpiece W by adjusting the inclination of the workpiece W so that the normal direction of the surface of the workpiece W coincides with the axial direction of the indenter 42. As a result, even if the surface of the workpiece W is curved or inclined, the indenter 42 can be pressed perpendicularly into the workpiece W.

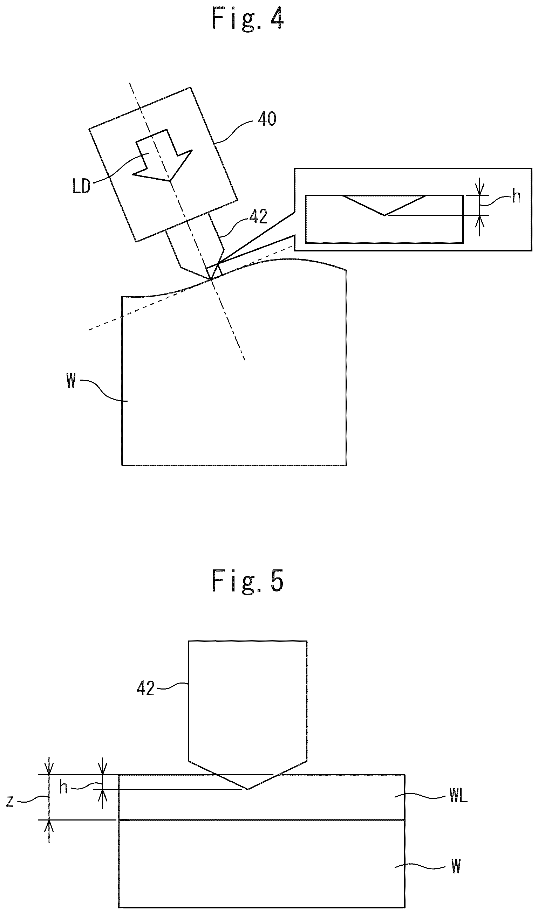

Note that an embodiment in which the indenter 42 is pushed vertically into the workpiece W by rotating the table 30 will be described, but the present invention is not limited thereto. As shown in FIG. 4, the spindle may be configured so as to be inclinable relative to the workpiece W, and the indenter 42 may be pushed vertically into the workpiece W by inclining the indenter 42 relative to the workpiece W.

As shown in FIG. 1, the machine tool 10 comprises an NC control part 36 as a controller for operating each of the feed devices 22, 32, 26, i.e., the X-axis feed device 22, the Y-axis feed device 32, and the Z-axis feed device 26, and moving the indenter 42 or the table 30 to a desired position by executing an NC program stored in an NC program storage part 36a. As a result, the indenter 42 attached to the spindle 20 can be pushed to a predetermined position in the workpiece W. The NC control part 36 is also configured so as to operate the spindle 20 and rotate the spindle 20 and the tool 62, 64 so that the workpiece W can be machined with the tool 62, 64 attached to the spindle 20. Furthermore, the machine tool 10 comprises a tool magazine 44 for storing the indenter 42 and the tools 62, 64, and is configured so as to operate the spindle 20 and remove the indenter 42 or the tool 62, 64 from the tool magazine 44 and attach them to the spindle 20 in accordance with the type of operation to be performed by operating the spindle 20, i.e., measuring the work-affected layer WL or machining.

The machine tool 10 further comprises an arithmetic device 38 as a device for measuring work-affected layer for measuring and evaluating the work-affected layer WL of the workpiece W. The arithmetic device 38 is electrically connected to the X-axis position detection device 24, the Y-axis position detection device 34, and the Z-axis position detection device 28, and is configured so as to acquire the position information detected by these devices. The X-axis and Y-axis position information represent coordinate values for pressing the indenter 42 into the workpiece W, and the Z-axis position information represents coordinate values corresponding to the indentation depth h of the indenter 42.

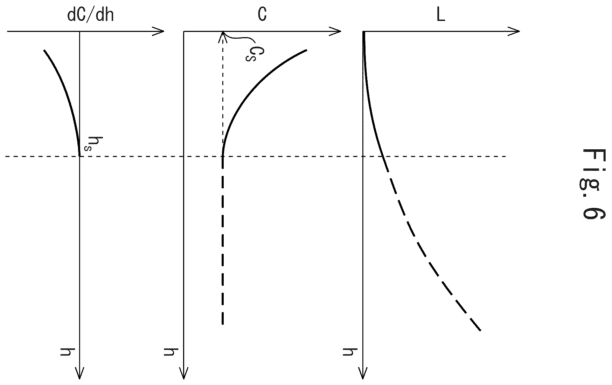

A load sensor 46 as an indentation load detector for detecting an indentation load L (refer to FIG. 6) acting on the indenter 42 as the indenter 42 is pressed into the workpiece W is arranged on the spindle head 18. The load sensor 46 is electrically connected to the arithmetic device 38, which is configured so as to record the indentation load L detected by the load sensor 46. Note that an embodiment in which the load sensor 46 is arranged on the spindle head 18 is described below, but the present invention is not limited thereto, and the load sensor may be provided in the tool holder or on the table.

FIG. 5 shows a schematic cross-sectional view of the workpiece W with the indenter 42 pressed into the work-affected layer WL. FIG. 6 shows a graph of an example of the changes in indentation load L, indentation load coefficient C, and rate of change of indentation load coefficient C (dC/dh) versus indentation depth h. As the indenter 42 is pressed into the work-affected layer WL, the indentation depth h and indentation load L are continuously detected by the indentation depth detection part 38a and load sensor 46, and these values are recorded in the arithmetic device 38. The arithmetic device 38 comprises a suspension control part 38b as indenter pressing suspension control means. The suspension control part 38b approximates the indentation load L measured up to that time point as a quadratic function of indentation depth h and continuously calculates the indentation load coefficient C (= $L/h^2$), which is a coefficient of the approximated quadratic function. The rate of change (dC/dh) of the indentation load coefficient C relative to the indentation depth h is continuously calculated.

Immediately after pressing of the indenter 42, the indentation load coefficient C decreases due to the influence of the work-affected layer WL. Once the indenter 42 is pressed to a certain depth, the influence of the work-affected layer WL decreases, and thus, the indentation load coefficient C becomes a constant value. When the indenter 42 is pressed to an indentation depth $h_s$ where the influence of the work-affected layer WL decreases, the indentation load coefficient C for the indentation depth h becomes a constant value $C_S$. Specifically, the rate of change of the indentation load coefficient C (dC/dh) changes from negative to a value sufficiently close to zero. At this time, the suspension control part 38b is configured so as to suspend the spindle 20 via the NC control part 36, thereby suspending the pressing of the indenter 42. In practice, the rate of change of the indentation load coefficient C may not converge strictly to zero, and the pressing of the indenter 42 may be suspended when it reaches a predetermined value sufficiently close to zero.

The arithmetic device 38 comprises a depth calculation part 38c as a work-affected layer depth calculation means, and the depth calculation part 38c calculates a work-affected layer depth Z by multiplying the indentation depth $h_s$ at the time point when pressing of the indenter 42 is suspended by a depth conversion constant stored in advance. The indentation load L receives an influence of up to approximately seven times the indentation depth h, and the indentation load coefficient C can be considered a representative value at a position half the indentation depth h (Non-Patent Literature 1). Thus, the depth conversion constant multiplied by the indentation depth $h_s$ at the suspended time point is set to 3.5. Note that although the depth conversion constant is set to 3.5, since the depth conversion constant varies mainly in accordance with the shape of the indenter, a different value of the depth conversion constant may be used.

The machine tool 10 comprises a display device 52 which is connected to the arithmetic device 38 for displaying the calculated work-affected layer depth Z. As a result, the user can visually confirm that the calculated work-affected layer depth Z is less than the finishing allowance of the workpiece W and that finishing can be performed. The arithmetic device 38 is also configured so as to operate the machine tool 10 so that when the calculated work-affected layer depth Z is less than the finishing allowance of the workpiece W, the machine tool 10 proceeds to finishing, and when the calculated work-affected layer depth Z is greater than the finishing allowance of the workpiece W, the machine tool 10 stops machining of the workpiece W.

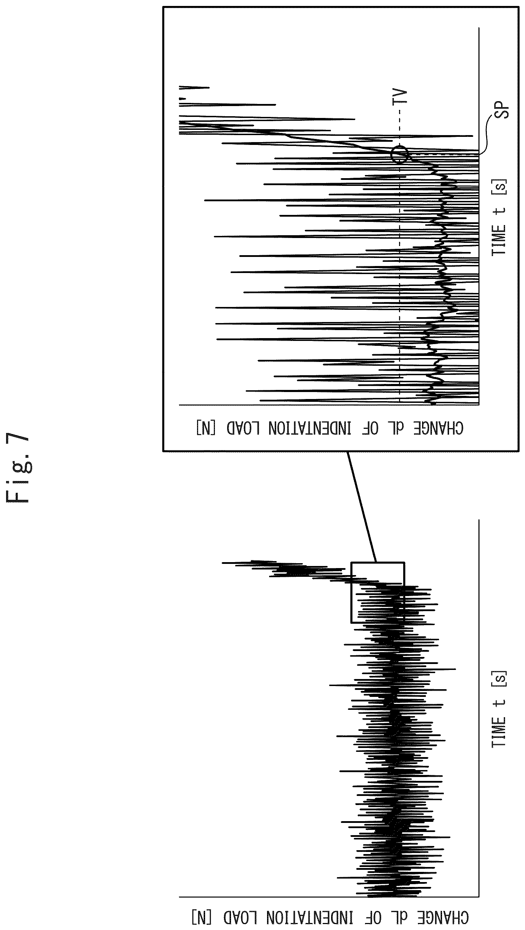

FIG. 7 shows a time series representing the time change dL of the indentation load L. As described above, the indentation load coefficient C (= L/h$^2$) is calculated by approximating the indentation load L by a quadratic function of the indentation depth h. Thus, in order to stabilize and improve the measurement accuracy of the indentation load L and the indentation depth h, it is preferable to set the time point at which the indenter 42 is pressed into the surface of the workpiece W and the indentation depth h actually occurs as the load start point of the indentation load L. Thus, the arithmetic device 38 is configured so as to calculate the moving average of the time change dL of the continuously recorded indentation load L and set the time point SP, at which a predetermined threshold TV, at which it can be determined that a significant indentation depth h has occurred, is exceeded as the load start point of the indentation load L and the position at which the indentation depth h=0.

In addition to measuring the work-affected layer WL, the machine tool 10 comprising the arithmetic device 38 can also measure non-uniform biaxial stresses using an indentation method which does not rely on a reference hardness under unstressed conditions. Specifically, the indentation load L and the indentation depth h can be measured using, as the indenters, a Vickers pyramid indenter VI with a predetermined apex angle and a square bottom surface, and a Knoop pyramid indenter NI with a predetermined apex angle and a diamond-shaped bottom surface having a long axis LA and a short axis SA. Prior to machining of the workpiece W, the Vickers pyramid indenter VI and the Knoop pyramid indenter NI attached to the spindle 20 of the machine tool 10 are pressed into an unstressed reference test sample (not illustrated) composed of the same material as the workpiece W to measure the indentation load L and the indentation depth h, respectively. From the measured indentation load L and indentation depth h, the indentation load ratio η of the indentation load L of the Knoop indenter NI to the indentation load L of the Vickers indenter VI at the same indentation depth h is calculated.

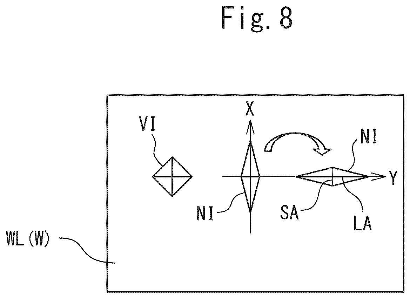

Next, as shown in FIG. 8, using the axial feed devices 22, 32, 26 of the machine tool 10, the Knoop pyramid indenter NI is pressed into the workpiece W with the long-axis LA of the bottom surface facing in the X-axis direction, which is the first direction, thereby measuring the indentation depth h and the first indentation load L1 of the Knoop pyramid indenter NI on the workpiece W. Furthermore, using the axial feed devices 22, 32, 26 of the machine tool 10, the Knoop pyramid indenter NI is pressed into the workpiece W with the long-axis LA of the bottom surface facing in the Y-axis direction, which is the second direction perpendicular to the X-axis direction, thereby measuring the indentation depth h and the second indentation load L2 of the Knoop pyramid indenter NI on the workpiece W. Furthermore, using the axial feed devices 22, 26, 32 of the machine tool 10, the Vickers pyramid indenter VI is pressed into the workpiece W, thereby measuring the indentation depth h of the Vickers pyramid indenter VI into the workpiece W and the third indentation load L3 for pressing the Vickers pyramid indenter VI. The method of changing the phase of the Knoop pyramid indenter NI by 90 degrees is performed using the indexing positioning function of the spindle 20 or the indexing positioning function of the table 30.

From the indentation load ratio η, the first indentation load L1, the second indentation load L2, and the third indentation load L3 measured in this manner, the arithmetic device 38 can calculate the X-axis stress $\sigma^X$, which is the first residual stress in the X-axis direction, and the Y-axis stress $\sigma^Y$, which is the second residual stress in the Y-axis direction, at each indentation depth h using the following formulas:

$$F1=(L2-\eta \times L3)$$

$$F2=(L1-\eta \times L3)$$

$$F3=(\alpha 2-\eta \times \alpha 3)$$

$$F4=(\alpha 1-\eta \times \alpha 3)$$

$$\sigma^X = (F1 \times F3 - F2 \times F4)/(F4 \times F4 - F3 \times F3)$$

$$\sigma^Y = (F2 \times F3 - F1 \times F4)/(F4 \times F4 - F3 \times F3)$$

In the formulas, α1 represents a conversion coefficient between stress and load change when the Knoop Indenter NI is indented with its long-axis LA parallel to the stress direction, α2 represents a conversion coefficient between stress and load change when the Knoop Indenter NI is indented with its long-axis LA perpendicular to the stress direction, and α3 represents a conversion coefficient between stress and load change when the Vickers Indenter VI is indented. These are constants determined in accordance with the material of the workpiece W. When the calculated residual stresses $\sigma^X$ and $\sigma^Y$ are positive, a compressive force is acting at the measurement point, there is little risk of fracture in the workpiece material, and the workpiece W is deemed to be suitable. Conversely, when they are negative, a tensile force is acting at the measurement point, and there is a risk of fracture originating from some type of defect in the workpiece material, and the workpiece is deemed to be defective. Though the Vickers pyramid indenter VI and the Knoop pyramid indenter NI, which have a predetermined apex angle, have been described, the present invention is not limited to these, and a pyramid indenter having a square bottom surface and a pyramid indenter having a diamond-shaped bottom surface without a predetermined apex angle may also be used. In such cases, the various coefficients in the above calculation formula will change.

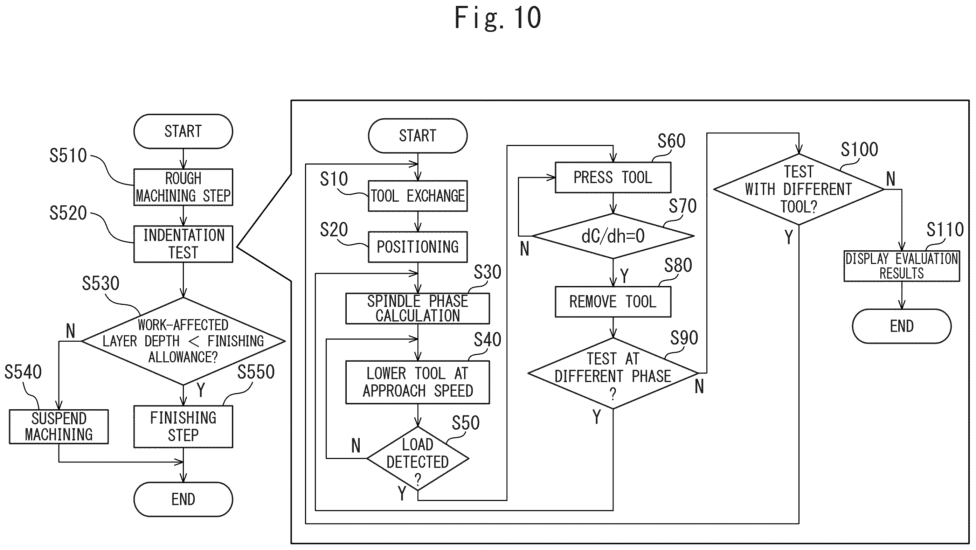

A method for measuring the work-affected layer WL of the workpiece W, a method for machining the workpiece W, and modes of operation and effects of the arithmetic device 38 and the machine tool 10 according to the present embodiment will be described below by means of description of the machining steps of the workpiece W, including the indentation test, according to the explanatory diagram and flow chart shown in FIGS. 9 and 10.

First, the process proceeds to step S510, and rough machining of the workpiece W is performed using a rough machining tool 62 attached to the spindle 20 via the tool holder 60. When rough machining is complete, the process proceeds to step S520, and an indentation test for measuring the work-affected layer WL generated on the machined surface of the workpiece W is performed.

When the indentation test starts, the process proceeds to step S10, and the indenter 42 installed in the indenter holder 40 removed from the tool magazine 44 is attached to the spindle 20 in place of the tool 62. As an example, a Knoop Pyramid Indenter NI is used as the indenter 42. When the indenter 42 is attached to the spindle 20, the process proceeds to step S20, and the axial feed devices 22, 32, 26 are activated to move the indenter 42 to a position where it will be pressed into the workpiece W, and the inclination of the table 30 is adjusted so that the axial direction of the indenter 42 coincides with the direction normal to the surface of the workpiece W. When these adjustments are complete, the process proceeds to step S30, and the phase of the spindle 20 is calculated and adjusted. When using the Knoop Pyramid Indenter NI to measure the first indentation load L1, the phase is adjusted so that the long axis LA is aligned with the X-axis direction, i.e., parallel to the X-axis. When measuring the second indentation load L2, the phase is adjusted so that the long axis LA is aligned with the Y-axis direction. After the phase adjustment is complete, the process proceeds to step S40, and the spindle 20, to which the indenter 42 is attached, is lowered toward the workpiece W at a predetermined approach speed, and the process proceeds to step S50.

In step S50, the load sensor 46 is activated to start measuring the indentation load L. The arithmetic device 38 calculates the moving average of the time change dL of the continuously recorded indentation load L, and sets the time point SP at which a predetermined threshold TV, at which it can be determined that a significant indentation depth h has occurred, is exceeded as the load start point of the indentation load L and the starting point for measuring the indentation depth h, and the process proceeds to step S60.

In step S60, as the indenter 42 is pressed into the work-affected layer WL, the indentation depth h and the indentation load L are continuously detected by the indentation depth detection part 38a and the load sensor 46. The arithmetic device 38 records these detected data, and the suspension control part 38b approximates the indentation load L measured up to that time point by a quadratic function of the indentation depth h and continuously calculates the indentation load coefficient C (= $L/h^2$), which is the coefficient of the quadratic function. Furthermore, the suspension control part 38b continuously calculates the rate of change (dC/dh) of the indentation load coefficient C with respect to the indentation depth h. When the indenter 42 is pressed to an indentation depth $h_s$ at which the influence of the work-affected layer WL becomes small, the indentation load coefficient C becomes a constant value $C_S$, and the rate of change (dC/dh) of the indentation load coefficient C becomes a predetermined value sufficiently close to zero from negative, the suspension control part 38b suspends the descent of the spindle 20 via the NC control part 36, suspending the pressing of the indenter 42. The depth calculation part 38c calculates the work-affected layer depth Z by multiplying the indentation depth $h_s$ at the time point where the pressing of the indenter 42 was suspended by the depth conversion constant stored in the depth calculation part 38c. After calculating the work-affected layer depth Z, the process proceeds to step S80, and the spindle 20 is raised and the indenter 42 is removed from the workpiece W.

When the indenter 42 is removed, the process proceeds to step S90. When the Knoop pyramid indenter NI is used as the indenter 42 and measurement of either the first indentation load L1 or the second indentation load L2 has not been completed, the process proceeds to step S30, and the phase of the spindle 20 is changed and measurement of the first indentation load L1 or the second indentation load L2 that has not yet been completed is performed. When measurement of both the first indentation load L1 and the second indentation load L2 using the Knoop pyramid indenter NI has been completed or if the Vickers pyramid indenter VI is used as the indenter 42, the process proceeds to step S100.

The process proceeds to step S100, and when measurement using the Knoop pyramid indenter NI or Vickers pyramid indenter VI has not been completed, the process proceeds to step S 10, the Knoop pyramid indenter NI or Vickers pyramid indenter VI to be used for measurement is removed from the tool magazine 44, and the indenter 42 attached to the spindle 20 is replaced. When the indenter 42 has been replaced, it is used to measure the indentation load L from step S20 to step S70. When measurements using both the Knoop pyramid indenter NI and the Vickers pyramid indenter VI are completed, the process proceeds to step S110, and the arithmetic device 38 outputs the measured and calculated work-affected layer depth Z, the indentation load ratio η, the first indentation load L1, the second indentation load L2, the third indentation load L3, the X-axis stress $\sigma^X$, which is the first residual stress in the X-axis direction, and the Y-axis stress $\sigma^Y$, which is the second residual stress in the Y-axis direction at each indentation depth h, to the display device 52.

When the indentation test is completed, the process proceeds to step 530, and when the work-affected layer depth Z calculated by the arithmetic device 38 is less than the finishing allowance of the workpiece W, the process proceeds to step S550, and the machine tool 10 is activated, the indenter 42 is replaced with the finishing tool 64, and finishing is performed. Conversely, when the calculated work-affected layer depth Z is greater than the finishing allowance of the workpiece W, the process proceeds to step S540, and finishing of the workpiece W is stopped.

The method for measuring the work-affected layer WL of the workpiece W, the method for machining the workpiece W, the arithmetic device 38, and the machine tool 10 according to the present embodiment comprise an indenter 42 which can be installed on the spindle 20, in place of the tool 62, 64, and which forms an indentation by pressing into the workpiece W using the axial feed devices 22, 32, 26 comprising the axial position detection devices of the machine tool 10, and a load sensor 46 for detecting the indentation load L of the indenter 42 on the workpiece W. Thus, after adjusting the position and phase of the indenter 42 relative to the workpiece W on the machine tool 10, the work-affected layer WL of the surface of the workpiece W can be measured, and the state of the work-affected layer WL can be easily evaluated. Furthermore, since the machine tool 10 comprises an arithmetic device 38 which can be connected to the NC control part 36, the indentation load coefficient C, which is the coefficient when the indentation load L is functionally approximated by the indentation depth h, is continuously calculated, and when the rate of change (dC/dh) of the indentation load coefficient C relative to the indentation depth h becomes a value sufficiently close to zero from negative, pressing of the indenter 42 into the workpiece W is suspended, and the indentation depth $h_S$ when the pressing of the indenter 42 is suspended is multiplied by the depth conversion constant to calculate the work-affected layer depth Z. As a result, unlike conventional indentation testing methods, the work-affected layer depth Z can be calculated without applying a load to the workpiece W until a preset indentation depth or indentation load value is reached, and the work-affected layer WL can be measured and evaluated with a reduced risk of the workpiece W being deemed defective.

Furthermore, according to the method for measuring the work-affected layer WL of the workpiece W, the method for machining the workpiece W, the arithmetic device 38, and the machine tool 10 of the present embodiment, the table 30 of the machine tool 10 is configured so as to be rotatable relative to the bed 12. Thus, the indenter 42 can be pressed perpendicularly into the workpiece W by adjusting the inclination of the workpiece W so that the normal direction of the surface of the workpiece W coincides with the axial direction of the indenter 42. As a result, even if the surface of the workpiece W is curved or inclined, the indenter 42 can be pressed perpendicularly into the workpiece W, and the indentation load L and the indentation depth h can be measured with high accuracy.

Furthermore, according to the measurement method of the work-affected layer WL of the workpiece W, the machining method of the workpiece W, the arithmetic device 38, and the machine tool 10 of the present embodiment, the arithmetic device 38 is configured so as to calculate a moving average value of the time change dL of the continuously recorded indentation load L, and to set the time point SP, at which a predetermined threshold TV, at which it can be determined that a significant indentation depth h has occurred, is exceeded as the load start point of the indentation load L. Thus, the time point at which the indenter 42 is pressed into the surface of the workpiece W and an indentation depth h actually occurs can be set as the load start point of the indentation load L, thereby stabilizing and improving the measurement accuracy of the indentation load L and, ultimately, the accuracy of the rate of change (dC/dh) of the indentation load coefficient C.

Furthermore, the method for measuring the work-affected layer WL of the workpiece W, the method for machining the workpiece W, the arithmetic device 38, and the machine tool 10 according to the present embodiment can calculate, in addition to the measurement of the work-affected layer WL, the indentation load ratio η, the first indentation load L1, the second indentation load L2, the third indentation load L3, the X-axis stress $\sigma^X$, which is the first residual stress in the X-axis direction, and the Y-axis stress $\sigma^Y$, which is the second residual stress in the Y-axis direction at each indentation depth h. As a result, in addition to calculating the work-affected layer depth Z, stress within the work-affected layer WL can be evaluated.

As described above, the method for measuring the work-affected layer WL of the workpiece W, the method for machining the workpiece W, the arithmetic device 38, and the machine tool 10 according to the present embodiment can easily evaluate the state of the work-affected layer WL of the machined surface of the workpiece W on the machine tool 10.

A device for measuring a work-affected layer using a conventional machine tool in which a load sensor 46 is not incorporated into the spindle head 18 and in which measurement of the work-affected layer is not considered will be described. In this case, a load sensor for measuring the indentation load L may be installed inside the indenter holder 40. A general-purpose PC is used as the arithmetic device, and the indentation depth detection part 38a, the suspension control part 38b, and the depth calculation part 38c are installed as application software on the PC, which is then connected to the user interface of NC unit of the machine tool. By retrofitting this device for measuring work-affected layer to a conventional machine tool, the above-described work-affected layer measurement method and method for processing workpiece can be implemented, and the device can perform functions equivalent to those of the machine tool 10 shown in FIG. 1. Specifically, this device for measuring work-affected layer can be considered a work-affected layer measurement kit, combining various indenters, indenter holders with built-in load sensors, a PC which can be connected to controller of the machine tool, and application software.

Though the embodiments of the method for measuring the work-affected layer WL of the workpiece W, the method for machining the workpiece W, the arithmetic device 38, and the machine tool 10 have been described above, the present invention is not limited to the above-described embodiments. For example, a horizontal machine tool comprising a horizontal spindle may be used instead of a vertical machine tool comprising a vertical spindle. A person skilled in the art would recognize that various modifications can be made to the embodiments described above.

REFERENCE SIGNS LIST

| 10 | machine tool |
| 20 | spindle |
| 22 | X-axis feed device (feed device) |
| 26 | Z-axis feed device (feed device) |
| 32 | Y-axis feed device (feed device) |
| 36 | NC control part (controller) |
| 38 | arithmetic device (device for measuring work-affected layer) |
| 38a | indentation depth detection part |
| 38b | suspension control part (indenter pressing suspension control means) |
| 38c | depth calculation part (work-affected layer depth calculation means) |
| 42 | indenter |
| 46 | load sensor (indentation load detector) |
| L | indentation load |
| L1 | first indentation load |
| L2 | second indentation load |
| L3 | third indentation load |
| h | indentation depth |
| NI | Knoop pyramid indenter |
| VI | Vickers pyramid indenter |
| WL | work-affected layer |

**Claims**

1. A method for measuring a work-affected layer of a surface of a workpiece, on a machine tool for machining the workpiece attached to a table with a tool installed on a spindle, the method comprising the steps of:

installing, in place of the tool, an indenter for indenting the workpiece on the spindle,
pressing the indenter into the workpiece using a feed device of the machine tool,
continuously measuring an indentation load for pressing the indenter and an indentation depth of the indenter into the workpiece,
continuously calculating an indentation load coefficient, which is a coefficient when the indentation load is functionally approximated by the indentation depth,
suspending pressing of the indenter into the workpiece when a rate of change of the indentation load coefficient with respect to the indentation depth becomes a value sufficiently close to zero from negative, and
calculating a work-affected layer depth by multiplying the indentation depth of the indenter when pressing is suspended by a depth conversion constant.

2. The method for measuring a work-affected layer of a workpiece according to claim 1, wherein the indenter is pressed along a direction normal to a surface of the workpiece.

3. The method for measuring a work-affected layer of a workpiece according to claim 1, wherein a load start point of the indentation load measured while pressing the indenter is defined as a time point when a moving average of a momentary change of the indentation load exceeds a predetermined threshold.

4. The method for measuring a work-affected layer of a workpiece according to any one of claims 1 to 3, wherein the indenter is a pyramid indenter having a bottom surface which is square or a rhombic pyramid indenter having bottom surface having a major axis and a minor axis, the method further comprising the steps of:

measuring, prior to machining the workpiece, an indentation load and an indentation depth by pressing the pyramid indenter having a bottom surface which is square and the pyramid indenter having a bottom surface which is rhombic into a reference test sample in an unstressed state, which is composed of the same material as the workpiece, using a feed device of the machine tool, and calculating an indentation load ratio of an indentation load of the pyramid indenter having a bottom surface which is rhombic relative to an indentation load of the pyramid indenter having a bottom surface which is square at the same indentation depth,
measuring an indentation depth of the pyramid indenter having a bottom surface which is rhombic into the workpiece and a first indentation load for pressing the pyramid indenter having a bottom surface which is rhombic by pressing the pyramid indenter having a bottom surface which is rhombic in a state in which the long axis of the bottom surface is oriented in a first direction into the workpiece using a feed device of the machine tool,

measuring an indentation depth of the pyramid indenter having a bottom surface which is rhombic into the workpiece and a second indentation load for pressing the pyramid indenter having a bottom surface which is rhombic by pressing the pyramid indenter having a bottom surface which is rhombic in a state in which the long axis of the bottom surface is oriented in a second direction orthogonal to the first direction into the workpiece using a feed device of the machine tool,

measuring an indentation depth of the pyramid indenter having a bottom surface which is square into the workpiece and a third indentation load for pressing the pyramid indenter having a bottom surface which is square by pressing the pyramid indenter having a bottom surface which is square into the workpiece using a feed device of the machine tool, and

calculating a first residual stress in the first direction and a second residual stress in the second direction at each indentation depth from the indentation load ratio, the first indentation load, the second indentation load, and the third indentation load.

5. A method for machining a workpiece, for performing, after rough machining of a workpiece attached to a table of a machine tool with a tool installed on a spindle, measurement of a work-affected layer of a surface of the workpiece on the machine tool, and performing finishing after measurement of the work-affected layer, the method comprising the steps of:

installing, after the rough machining, an indenter for indenting the workpiece on the spindle in place of the tool,

pressing the indenter into the workpiece using a feed device of the machine tool,

continuously measuring an indentation load for pressing the indenter and an indentation depth of the indenter into the workpiece,

continuously calculating an indentation load coefficient, which is a coefficient when the indentation load is functionally approximated by the indentation depth,

suspending pressing of the indenter into the workpiece when a rate of change of the indentation load coefficient with respect to the indentation depth becomes a value sufficiently close to zero from negative,

calculating a work-affected layer depth by multiplying the indentation depth of the indenter when pressing is suspended by a depth conversion coefficient, and

performing finishing when the calculated work-affected layer depth is less than a finishing allowance of the workpiece.

6. A machine tool for performing measurement of a work-affected layer of a surface of a workpiece, on a machine tool for machining the workpiece attached to a table with a tool installed on a spindle, the machine tool comprising:

an indenter which can be installed on the spindle in place of the tool and which forms an indentation by pressing into the workpiece using a feed device of the machine tool,

an indentation load detector for continuously measuring an indentation load of the indenter on the workpiece,

an indentation depth detector for continuously measuring an indentation depth of the indenter on the workpiece,

an indenter pressing suspension control means for continuously calculating an indentation load coefficient, which is a coefficient when the indentation load is functionally approximated by the indentation depth, and suspending pressing of the indenter into the workpiece when a rate of change of the indentation load coefficient with respect to the indentation depth becomes a value sufficiently close to zero from negative, and

a work-affected layer depth calculation means for calculating a work-affected layer depth by multiplying the indentation depth of the indenter when pressing is suspended by a depth conversion constant.

7. A device for measuring work-affected layer which is included in a machine tool for machining a workpiece attached to a table with a tool installed on a spindle, and which is for performing measurement of a work-affected layer of a surface of the workpiece, the device for measuring work-affected layer comprising:

an indenter which can be installed on the spindle in place of the tool and which forms an indentation by pressing into the workpiece using a feed device of the machine tool,

an indenter holder to which the indenter is detachably attached and which has a sensor for detecting an indentation load of the indenter against the workpiece, and

an arithmetic device which can be connected to a controller of the machine tool, for continuously calculating an indentation load coefficient, which is a coefficient when the indentation load is functionally approximated by the indentation depth, suspending pressing of the indenter into the workpiece when a rate of change of the indentation load coefficient with respect to the indentation depth becomes a value sufficiently close to zero from negative, and calculating a work-affected layer depth by multiplying the indentation depth of the indenter when pressing is suspended by a depth conversion constant.

# Fig. 1

# Fig. 2

# Fig. 3

# Fig. 4

# Fig. 5

# Fig. 6

Fig. 7

Fig. 8

# Fig. 9

(a) S510 ROUGH MACHINING STEP

(b) S520 INDENTATION TEST STEP

(c) S550 FINISHING STEP

Fig.10

START

S510 — ROUGH MACHINING STEP

S520 — INDENTATION TEST

S530 — WORK-AFFECTED LAYER DEPTH < FINISHING ALLOWANCE?

N → S540 — SUSPEND MACHINING

Y → S550 — FINISHING STEP

END

START

S10 — TOOL EXCHANGE

S20 — POSITIONING

S30 — SPINDLE PHASE CALCULATION

S40 — LOWER TOOL AT APPROACH SPEED

S50 — LOAD DETECTED?

N

Y

S60 — PRESS TOOL

S70 — dC/dh=0

N

Y

S80 — REMOVE TOOL

S90 — TEST AT DIFFERENT PHASE?

Y

N

S100 — TEST WITH DIFFERENT TOOL?

Y

N → S110 — DISPLAY EVALUATION RESULTS

END

EP 4 737 059 A1

Fig. 11

Fig. 12

## INTERNATIONAL SEARCH REPORT

International application No.

**PCT/JP2024/027329**

### A. CLASSIFICATION OF SUBJECT MATTER

***B23Q 17/20***(2006.01)i; ***G01N 3/42***(2006.01)i
FI:   B23Q17/20 Z; G01N3/42 E

According to International Patent Classification (IPC) or to both national classification and IPC

### B. FIELDS SEARCHED

Minimum documentation searched (classification system followed by classification symbols)

B23Q1/00-41/00, G01N1/00-37/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-085835 A (UNIV KANSAI) 03 June 2021 (2021-06-03) | 1-7 |
| A | JP 2011-145190 A (MITSUTOYO CORP.) 28 July 2011 (2011-07-28) | 1-7 |
| A | JP 10-206395 A (NTN CORP.) 07 August 1998 (1998-08-07) | 1-7 |
| A | JP 2011-106932 A (JTEKT CORP.) 02 June 2011 (2011-06-02) | 1-7 |

☐ Further documents are listed in the continuation of Box C.   ✓ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **05 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/027329**

| Patent document cited in search report | | | Publication date (day/month/year) | Patent family member(s) | | | Publication date (day/month/year) |
|---|---|---|---|---|---|---|---|
| JP | 2021-085835 | A | 03 June 2021 | (Family: none) | | | |
| JP | 2011-145190 | A | 28 July 2011 | US | 2011/0178728 | A1 | |
| | | | | EP | 2345884 | A2 | |
| | | | | CN | 102147345 | A | |
| JP | 10-206395 | A | 07 August 1998 | (Family: none) | | | |
| JP | 2011-106932 | A | 02 June 2011 | (Family: none) | | | |

Form PCT/ISA/210 (patent family annex) (July 2022)

23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021085804 A

**Non-patent literature cited in the description**

- **HIKAWA SHUHEI** ; **OKANO SHIGETAKA** ; **MOCHIZUKI MASAHITO** ; **HASHIMOTO TADAFUMI** ; **TEZUKA RYO**. Depth evaluation of affected layer by instrumented indentation technique and examination of its applicability to curved surface shape. *Abstract of the Japan Welding Society National Convention*, April 2023, vol. 112, 166-167

- **OKANO SHIGETAKA** ; **MOCHIZUKI MASAHITO**. Proposing a new semi-nondestructive measurement of non-equiaxial residual stress field using indentation technique without reference value of hardness under non-stress state. *Bulletin of the Japan Society of Mechanical Engineers*, 2014, vol. 80 (820), 1-11